# EUROPEAN PATENT APPLICATION

(11) **EP 3 770 995 A1**
(43) Date of publication of application: **27.01.2021**
(21) Application number: 19772632.6
(22) Date of filing: 22.01.2019
(51) Int. Cl.: H01M 2/26

(54) **SINGLE-CELL BATTERY, BATTERY MODULE, POWER BATTERY AND ELECTRIC VEHICLE**

(30) Priority: 23.03.2018 CN 201820409789 U
(71) Applicant: BYD Company Limited, Guangdong 518118 (CN)
(72) Inventor: WANG, Xinyue, Shenzhen, Guangdong 518118 (CN); CHENG, Han, Shenzhen, Guangdong 518118 (CN); YANG, Keli, Shenzhen, Guangdong 518118 (CN); JIANG, Luxia, Shenzhen, Guangdong 518118 (CN); PENG, Lingyi, Shenzhen, Guangdong 518118 (CN)
(74) Representative: Hoffmann Eitle
(86) International application number: PCT/CN2019/072662
(87) International publication number: WO 2019/179232

(57) **Abstract**

A cell, a battery module, a power battery, and an electric vehicle are provided. The cell according to an embodiment of the present disclosure includes: a housing; a cover plate located at an end of the housing; a pole core located in the housing and having an electrode tab; an inner spacer including a bottom plate, a connecting plate, and a support plate, where the bottom plate is disposed on a surface of the pole core facing the cover plate, one end of the connecting plate is connected to a side edge of the bottom plate and is formed in a bent shape with a side edge of the bottom plate, the other end of the connecting plate is connected to the support plate and is formed in a bent shape with the support plate, and the support plate extends toward a direction away from the bottom plate, a part of the electrode tab extending from a side surface of the support plate facing the pole core to a side surface away from the pole core; and a conductive terminal disposed on the cover plate and electrically connected to the electrode tab.

## Description

### CROSS-REFERENCE TO RELATED APPLICATIONS

This application claims priority to Chinese Patent Application Serial No. "201820409789.X", entitled "CELL, BATTERY MODULE, POWER BATTERY, AND ELECTRIC VEHICLE", filed by BYD Company Limited on March 23, 2018.

### FIELD

The present disclosure belongs to the technical field of vehicle manufacturing, and relates to a cell and a battery module provided with the cell, a power battery provided with the battery module, and an electric vehicle provided with the power battery.

### BACKGROUND

Generally, a power battery has at least two conductive terminals, and one end is connected to the conductive terminal by using a double-layer connector, and the other end is configured to clamp an electrode tab to be connected to a pole core, so that a circuit is powered on. In the related art, the connector clamping the electrode tab drives the tag to bend. Side spacers on both sides of a cover plate fixe and insulate the tag, but occupy at least a thickness of four layers of the connectors in a height direction, not facilitating increase of space utilization of a battery cell. The double-layer connector only clamps an end part of the electrode tab, and cannot effectively shape other parts of the electrode tab, especially a bent region. In addition, a tip of the double-layer connector is attached to the electrode tab. When the cell is under extreme conditions such as collision or vibration, the electrode tab may be cut, and even internal resistance in the cell may be increase and heat is generated abnormally, so that a risk of causing a safety accident is caused, and there is room for improvement.

### SUMMARY

The present disclosure is intended to resolve at least one of technical problems existing in the prior art. Accordingly, the present disclosure provides a cell, and an inner spacer of the cell supports, insulates, and shapes an electrode tab and is not easy to cut the electrode tab.

The cell according to an embodiment of the present disclosure includes: a housing; a cover plate located at an end of the housing; a pole core located in the housing and having an electrode tab; an inner spacer including a bottom plate, a connecting plate, and a support plate, where the bottom plate is disposed on a surface of the pole core facing the cover plate, one end of the connecting plate is connected to a side edge of the bottom plate and is formed in a bent shape with a side edge of the bottom plate, the other end of the connecting plate is connected to the support plate and is formed in a bent shape with the support plate, and the support plate extends toward a direction away from the bottom plate, a part of the electrode tab extending from a side surface of the support plate facing the pole core to a side surface away from the pole core; and a conductive terminal disposed on the cover plate and electrically connected to a side surface of the electrode tab away from the support plate.

For the cell according to an embodiment of the present disclosure, the inner spacer is disposed between the pole core and the conductive terminal. The inner spacer may support the electrode tab, and insulate and shape the electrode tab simultaneously, and prevent the electrode tab and the core from being short-circuited. In addition, the electrode tab is directly connected to the conductive terminal by welding, and the electrode tab is connected to the conductive terminal without the connector, reducing a space occupied by the cell in a height direction, increasing space utilization of the cell, and enhancing practicability of the cell.

The present disclosure further provides a battery module, including a connector and the cell in any of the foregoing embodiments, and the cells are connected in series or in parallel through a connector.

The present disclosure further provides a power battery, including a pack body and a battery module disposed in the pack body, and the battery module is the battery module described in the foregoing embodiment.

The present disclosure further provides an electric vehicle provided with the power battery described in the foregoing embodiment.

Compared to the prior art, advantages of the battery module, the power battery, the electric vehicle, and the foregoing cell are the same, and are not described herein again.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible from the following descriptions of the embodiments with reference to the accompanying drawings., where:
FIG. 1 and FIG. 2 are schematic structural diagrams of a cell according to an embodiment of the present disclosure;
FIG. 3 is a schematic structural diagram of an inner spacer of the cell according to an embodiment of the present disclosure;
FIG. 4 is a schematic structural diagram of clamping of the inner spacer of the cell with an insulating plate according to an embodiment of the present disclosure; and
FIG. 5 is a partially enlarged view of part A in FIG. 4.

### REFERENCE NUMERALS

### Cell 100,

Inner spacer 10, Bottom plate 11, Connecting plate 12, Support plate 13, Head 14, First section 141, Second section 142, Third section 143, Avoiding groove 15, Clamping plate 16, Positioning slot 161,
Pole core 20, Electrode tab 21,
Transition plate 30, Housing 40, Cover plate 50, Insulating plate 60, Buckle 61, Connecting post 611, Clamping portion 612, Guide surface 6121, and Conductive terminal 70.

### DETAILED DESCRIPTION

The following describes embodiments of the present disclosure in detail. Examples of the embodiments are shown in the accompanying drawings, and same or similar reference signs in all the accompanying drawings indicate same or similar components or components having same or similar functions. The embodiments described below with reference to the accompanying drawings are exemplary, and are intended to explain the present disclosure and cannot be construed as a limitation to the present disclosure.

In the description of the present disclosure, it should be understood that orientation or position relationships indicated by the terms such as "length", "width", "thickness", ""above", "below", "front", "back", "left", "right", "vertical", and "horizontal" "top", "bottom", "inside", "outside", and "circumferential" are based on orientation or position relationships shown in the accompanying drawings, and are used only for ease of describing the present disclosure and for ease of simplified descriptions, rather than indicating or implying that the mentioned apparatus or component needs to have a particular orientation or needs to be constructed and operated in a particular orientation. Therefore, such terms should not be construed as limiting of the present disclosure. In addition, a feature defined to be "first" or "second" may explicitly or implicitly include one or more features. In the description of the present disclosure, unless stated otherwise, the meaning of "a plurality of" is two or more than two.

In the description of the present disclosure, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection; or the connection may be a direct connection, an indirect connection through an intermediary, or internal communication between two components. A person of ordinary skill in the art may understand the specific meanings of the foregoing terms in the present disclosure according to specific situations.

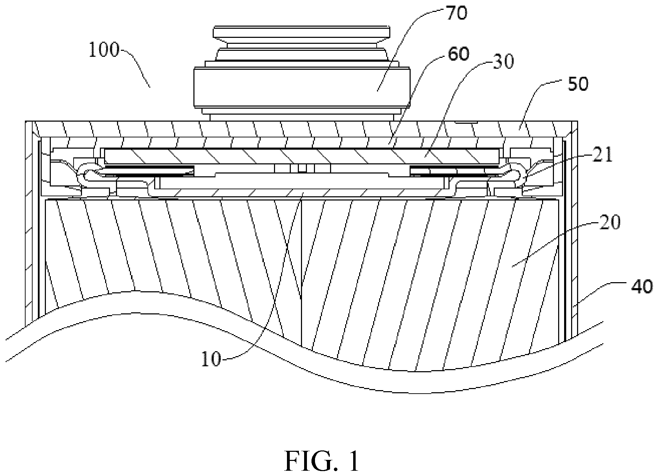

A cell 100 according to an embodiment of the present disclosure is described below with reference to FIG. 1 to FIG. 3.

As shown in FIG. 1 to FIG. 2, the cell 100 according to an embodiment of the present disclosure includes: a housing 40, a cover plate 50, a pole core 20, and an inner spacer 10.

The cover plate 50 is located at an end of the housing 40. The pole core 20 is disposed inside the cell 100, the pole core 20 is located in the housing 40, the pole core 20 has a electrode tab 21, and the pole core 20 is connected to a conductive terminal 70 of the cell 100 through the electrode tab 21. For example, the electrode tab 21 is connected to the conductive terminal 70 of the cell 100 by welding to implement current guidance of the pole core 20 and a cover plate 50 assembly and ensure normal current conduction between the pole core 20 and the cover plate 50 assembly.

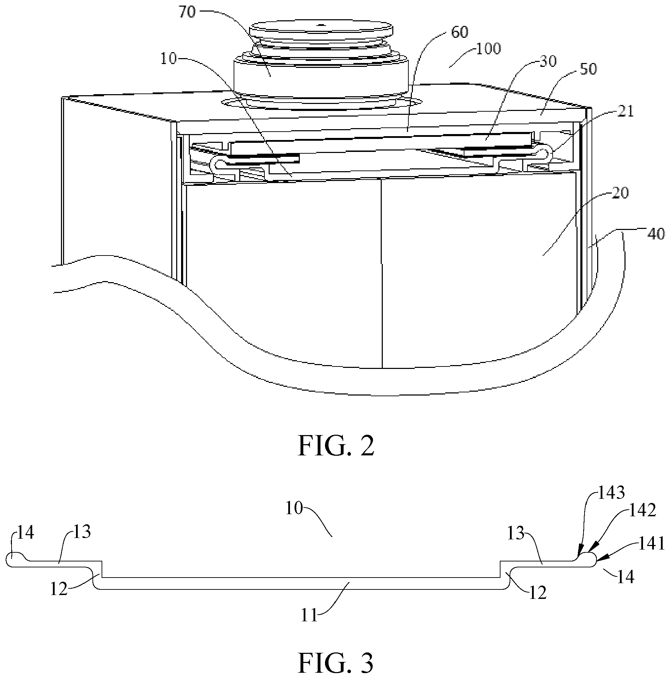

As shown in FIG. 1 and FIG. 2, the inner spacer 10 may be configured to separate the conductive terminal 70 of the cell 100 from the pole core 20 to effectively insulate the conductive terminal 70 from the pole core 20. As shown in FIG. 3, the inner spacer 10 includes a bottom plate 11, a connecting plate 12, and a support plate 13. The bottom plate 11 is supported by the pole core 20. The bottom plate 11 is disposed on a surface of the pole core 20 facing the cover plate 50. One end of the connecting plate 12 is connected to an edge of the bottom plate 11, and the one end of the connecting plate 12 and a side edge of the bottom plate 11 are formed in a shape. In other words, a direction in which the connecting plate 12 extends is different from a direction in which the bottom plate 11 extends. For example, the bottom plate 11 extends in a horizontal direction, and the connecting plate 12 extends toward a height direction of the cell 1 00.

As shown in FIG. 1 and FIG. 2, the support plate 13 is connected to the other end of the connecting plate 12, and the support plate 13 and the other end of the connecting plate 12 are formed in a bent shape, that is, the support plate 13 and the bottom plate 11 are connected through the connecting plate 12. The support plate 13 extends toward a direction away from the bottom plate 11, and a certain height difference is formed between the support plate 13 and the bottom plate 11. It may be understood that the height difference between the support plate 13 and the bottom plate 11 may facilitate that the electrode tab 21 protrudes from an upper surface of the pole core 20, the electrode tab 21 extends to a lower surface of the support plate 13 and bends, and then extends along the lower surface of the support plate 13 toward a direction away from the bottom plate 11. In this way, the support plate 13, the connecting plate 12, and the bottom plate 11 are sequentially connected as a whole, and a part of the electrode tab 21 extends from a side surface of the support plate 13 facing the pole core 20 to a side surface away from the pole core 20. In an embodiment, the electrode tab 21 extends along the lower surface of the support plate 13 toward a direction away from the bottom plate 11, and the electrode tab 21 bypasses the end of the support plate 13 and extends to an upper surface of the support plate 13, thereby effectively shaping the electrode tab 21, especially the bent portion of the electrode tab.

It should be noted that in FIG. 3, both ends of the bottom plate 11 are provided with a connecting plate 12 and a support plate 13. In other words, the inner spacer 10 includes two connecting plates 12, two support plates 13, and a bottom plate 11. In this way, the inner spacer 10 may be simultaneously fitted with two electrode tabs 21 through mounting, to support and insulate the electrode tabs 21 of the pole core 20 and ensure normal current conduction between the electrode tabs 21 and the conductive terminal 70.

As shown in FIG. 1 and FIG. 2, the conductive terminal 70 is disposed on the cover plate 50, and the conductive terminal 70 is electrically connected to a side surface of the electrode tab 21 away from the support plate 13. In other words, after the electrode tab 21 is bent and bypasses the support plate 13 to extend, an upper surface of the electrode tab 21 is attached to and connected, by welding, to the conductive terminal 70. Therefore, the electrode tab 21 contacts the conductive terminal 70 in a large contact area, effectively increasing overcurrent capability of the electrode tab 21 and the conductive terminal 70, and improving practical performance of the cell 100. The conductive terminal 70 is connected to the cover plate 50 in an insulated and sealed manner. In this way, there is no current conduction between the conductive terminal 70 and the cover plate 50.

In an embodiment, as shown in FIG. 1 and FIG. 2, the electrode tab 21 of the pole core 20 may be directly connected to the conductive terminal 70 by welding, the inner spacer 10 supports the electrode tab 21 below the electrode tab 21 and separates the electrode tab 21 from the pole core 20 a height direction, to achieve effective insulation, and the electrode tab 21 is bent along an outer side of the inner spacer 10. In this way, the electrode tab 21 is directly welded to the conductive terminal 70 without a connector, reducing space occupied in the height direction and effectively improving space utilization of the cell 100.

For the cell 100 according to this embodiment of the present disclosure, the inner spacer 10 is disposed between the pole core 20 and the conductive terminal 70. The inner spacer 10 may support the electrode tab 21, and insulate and shape the electrode tab 21 simultaneously, and prevent the electrode tab 21 and the core 20 from being short-circuited. In addition, the electrode tab 21 is directly connected to the conductive terminal 70 by welding, and the electrode tab 21 is connected to the conductive terminal 70 without the connector, reducing a space occupied by the cell 100 in a height direction, increasing space utilization of the cell 100, and enhancing practicability of the cell 100.

For the cell 100 according to this embodiment of the present disclosure, as shown in FIG. 1 and FIG. 2, a transition plate 30 is further included and the transition plate 30 has a through hole. The conductive terminal 70 sequentially passes through the cover plate 50 and the through hole, and the conductive terminal 70 is connected to the transition plate 30 by welding, and a side surface of the transition plate 30 away from the cover plate 50 is connected to a side surface of the electrode tab away from the support plate 13. In this way, the conductive terminal 70 is connected to the electrode tab 21 through the transition plate 30 to conduct current between the conductive terminal 70 of the cell 100 and the pole core 20.

In an embodiment, as shown in FIG. 1 and FIG. 2, the cell 100 of the present disclosure further includes an insulating plate 60. The insulating plate 60 is located between the cover plate 50 and the transition plate 30, the insulating plate 60 has fixing hole, and the conductive terminal 70 passes through the fixing hole to fix the insulating plate 60. Therefore, the conductive terminal 70 sequentially passes through the cover plate 50, the fixing hole of the insulating plate 60, and the through hole of the transition plate 30, and is connected to the electrode tab 21. At the same time, the conductive terminal 70, the insulating plate 60, the transition plate 30, and the electrode tab 21 are relatively fixed to ensure that an overall structure inside the cell 100 is complete.

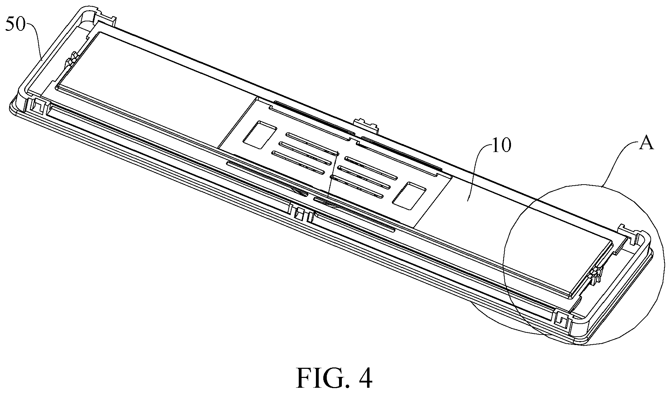

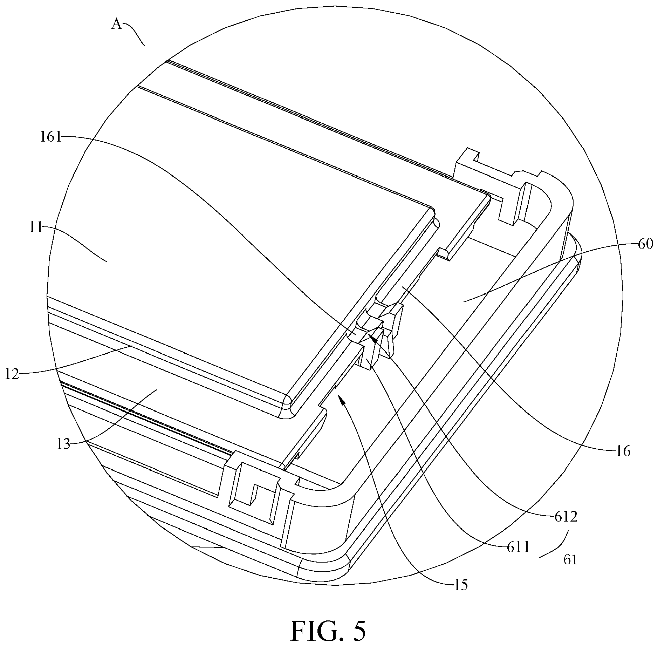

As shown in FIG. 4 and FIG. 5, the inner spacer 10 is fixedly connected to the insulating plate 60 through clamping. In an embodiment, an end of the inner spacer 10 is provided with a positioning slot 161, the insulating plate 60 has a buckle 61, and the buckle 61 fits the positioning slot 161 to relatively fix the insulating plate 60 to the inner spacer 10. The inner spacer 10 further includes a clamping plate 16, and the clamping plate 16 is disposed on a side edge of the bottom plate 11. In an embodiment, the clamping plate 16 is disposed at both ends of the bottom plate 11 along a length direction, the clamping plate 16 extends along a width direction of the bottom plate 11, and the clamping plate 16 and the support plate 13 are located on adjacent sides of the bottom plate 11. It may be understood that the support plate 13 is located at both ends of the bottom plate 11 along the width direction, and the support plate 13 extends along the length direction of the bottom plate 11. In this way, the clamping plate 16 and the support plate 13 are spaced apart along a circumferential direction of the bottom plate 11. The positioning slot 161 is disposed at an end of the clamping plate 16 away from the bottom plate 11, and the positioning slot 161 is located on a surface of the clamping plate 16 facing the pole core 20. In other words, the positioning slot 161 is located on a surface of the clamping plate 16 away from the insulating board 60. An end of the clamping plate 16 is provided with an avoiding groove 15. It should be noted that the insulating plate 60 is located on a side surface of the clamping plate 16 away from the pole core 20. Therefore, the buckle 61 passes through the avoiding groove 15 from a side of the clamping plate 16 away from the pole core 20, and extends to a side of the clamping plate 16 close to the pole core 20, so that the buckle 61 is clamped into the positioning slot 161 of the clamping plate 16, and the insulating plate 60 is stably and fixedly connected to the inner spacer 10.

In some embodiments, as shown in FIG. 4 and FIG. 5, the buckle 61 includes a connecting post 611 and a clamping portion 612. One end of the connecting post 611 is connected to the insulating plate 60, that is, one end of the connecting post 611 away from the pole core is fixedly connected to the insulating plate 60. The clamping portion 612 is connected to the other end of the connecting post 611, that is, the clamping portion 612 is connected to an end of the connecting post 611 close to the pole core. In addition, the clamping portion 612 protrudes toward a direction close to the clamping plate 16 and the support plate 13, the clamping portion 612 presses against a bottom wall of a positioning groove 161 toward end surfaces of the clamping plate 16 and the support plate 13, and an end surface of the clamping portion 612 away from the clamping plate 16 and the support plate 13 is provided with a guide surface 6121. The guide surface 6121 may facilitate clamping between the support plate 13 and the buckle 61.

It should be noted that the insulating plate 60 is provided with two sets of buckles 61 disposed opposite to each other, and the support plate 13 is provided with two sets of positioning slots 161 disposed opposite to each other. A distance between two sets of clamping portions 612 of the two sets of buckles 61 is less than a distance between two ends of the support plate 13, and the distance between the two ends of the support plate 13 is less than a distance between two sets of connecting posts 611 of the two sets of buckles 61. The two sets of clamping portions 612 are provided with guide surfaces 6121 disposed opposite to each other. In this way, an end of the support plate 13 is pressed along the guide surface 6121 of the clamping portion 612, the connecting post 611 is bent under a pressure from the guide surface 6121, an inner spacer is clamped between the two sets of connecting posts 611, and the clamping portion 612 may prevent the inner spacer from detaching from the buckle 61, improving stability of an overall structure of the cell.

For the cell 100 according to an embodiment of the present disclosure, as shown in FIG. 1 to FIG. 3, the bottom plate 11 and the support plate 13 are both disposed in a direction parallel to the cover plate 50. For example, the bottom plate 11 is parallel to and attached to the pole core 20 of the cell 100, the support plate 13 is connected to the bottom plate 11 through the connecting plate 12, and the support plate 13 is formed through extension along a direction parallel to the bottom plate 11. There is a height difference between the bottom plate 11 and the support plate 13, and the bottom plate 11 is parallel to the pole core 20, so that there is a distance difference between the support plate 13 and the pole core 20. For example, in some embodiments, the connecting plate 12 is perpendicular to the support plate 13 and the bottom plate 11, and the electrode tab 21 is spaced apart from the bottom plate 11 and the connecting plate 12. In other words, a certain space is defined among the connecting plate 12, the support plate 13, and the pole core 20. In this way, the defined space may facilitate that the electrode tab 21 is protruded from the pole core 20 and bent, thereby enhancing rationality of disposing of various components of the cell 100.

In some embodiments, the connecting plate 12 is a ring surrounding the bottom plate 11, the clamping plate 16 is connected to the connecting plate 12, and the clamping plate 16 is disposed coplanar with the support plate 13. It may be understood that the inner spacer 10 includes the clamping plate 16, the connecting plate 12, the bottom plate 11, the connecting plate 12, and the clamping plate 16 that are sequentially connected along a length direction, and the inner spacer 10 includes the support plate 13, the connecting plate 12, the bottom plate 11, the connecting plate 12, and the support plate 13 that are sequentially connected in a width direction. Therefore, an outer side of the bottom plate 11 is provided with a connecting plate 12 extending in a circumferential direction, and an outer side of the connecting plate 12 is provided with a support plate 13 and a clamping plate 16 spaced apart and extending in a circumferential direction. The bottom plate 11, the connecting plate 12, the support plate 13, and the clamping plate 16 are integrally formed, facilitating increase of integrality of the inner spacer 10, enhancing structural strength of the inner spacer 10, and facilitating mounting.

For the cell 100 according to an embodiment of the present disclosure, as shown in FIG. 3, the inner spacer 10 further includes a head 14. The head 14 is arc-shaped, and the head 14 is connected to an end of the support plate 13 away from the connecting plate 12. At least one part of the head 14 is arc-shaped, and a thickness of the head 14 is greater than a thickness of the support plate 13. In this way, the electrode tab 21 extends along a lower surface of the support plate 13 toward a direction away from the bottom plate 11 to the head 14, and the electrode tab 21 bypasses the head 14 and extends to an upper surface of the support plate 13. A bending curvature of the electrode tab 21 at a position bypassing the head 14 is small, that is, a bending stress of the electrode tab 21 is small, which is not easy to cause the electrode tab 21 to bend and break. When an arc section of the head 14 contacts the electrode tab 21, the electrode tab 21 is not cut, to prevent the electrode tab 21 from being cut due to a cutting edge in the inner spacer 10, improving safety of use of the cell 100.

In an embodiment, as shown in FIG. 3, a profile of the head 14 includes a first section 141, a second section 142, and a third section 143 that are sequentially connected. An end of the first section 141 away from the second section 142 is connected to a surface of the support plate 13 facing the pole core 20, and an end of the third section 143 away from the second section 142 is connected to a surface of the support plate 13 away from the pole core 20, that is, the first section 141, the second section 142, and the third section 143 extend from a lower surface of the support plate 13 to an upper surface of the support plate 13. In this way, the electrode tab 21 extends along the lower surface of the support plate 13 to the first section 141, and then extends along an outer surface of the first section 141 and sequentially bypasses the second section 142 and the third section 143, so that the electrode tab 21 is bent and extended to the upper surface of the support plate 13, and is then attached to, connected, by welding, to the conductive terminal 70.

As shown in FIG. 3, the first section 141 is arc-shaped. When the electrode tab 21 extends along the outside of the first section 141, the arc-shaped first section 141 does not cut the electrode tab 21. It should be noted that the electrode tab 21 is a multilayer metal sheet, and the electrode tab 21 has relatively low hardness. When the electrode tab 21 bypasses the head 14 of the inner spacer 10, the electrode tab 21 may contact a surface of the head 14 of the inner spacer 10. In this way, when the cell 100 is under extreme conditions such as collision or vibration, the electrode tab 21 is not cut by the inner spacer 10, effectively prolonging a service life of the electrode tab 21, thereby improving use performance of the cell 100.

As shown in FIG. 3, the second section 142 is linear. In other words, when the electrode tab 21 bypasses the head 14 of the inner spacer 10, the electrode tab 21 extends at least partially along a straight line, and a distance from the second section 142 to the pole core 20 is greater than a distance from the support plate 13 to the pole core 20, that is, an upper surface of the second section 142 is higher than an upper surface of the support plate 13. In other words, a thickness of the head 14 of the inner spacer 10 is greater than a thickness of the support plate 13. In this way, when the electrode tab 21 bypasses the head 14 of the inner spacer 10, a bent arc of the electrode tab 21 is great, that is, a bending curvature of the electrode tab 21 is small. When the electrode tab 21 is bent, stresses on an inner side of the electrode tab 21 and an outer side of the electrode tab 21 are both small, so that the electrode tab 21 is not easy to break during bending, significantly improving safety performance of use of the electrode tab 21 and extending a service life of the electrode tab 21, thereby facilitating long-term use of the electrode tab.

As shown in FIG. 3, the third section 143 is arc-shaped. A radius of curvature of the first section 141 is less than a radius of curvature of the third section 143. When the electrode tab 21 bypasses the third section 143, the electrode tab 21 may not be completely attached to the third section 143. In this way, after the electrode tab 21 bypasses the second section 142, the electrode tab 21 extends to the upper surface of the support plate 13 by using a radius of curvature less than a radius of curvature of the third section 143. In other words, there is a small gap between a lower surface of the electrode tab 21 and the third section 143. The gap may absorb a part of vibration energy when the cell 100 is under extreme conditions such as collision or vibration, to reduce damage to the cell 100 caused by the external environment, and further facilitating increase of rationality of overall structure design of the cell 100.

In an embodiment, as shown in FIG. 3, the third section 143 includes two arcs. Centers of curvature of the two arcs of the third section 143 are respectively located on both sides of the third section 143. For example, a center of curvature of one arc connecting the third section 143 to the support plate 13 is located on a side of the third section 143 away from the pole core 20, and a center of curvature of the other arc connecting the third section 143 to the second section 142 is located at a side of the third section 143 close to the pole core 20. In this way, the third section 143 is formed as a smooth arc-shaped transition between the support plate 13 and the second section 142, and the electrode tab 21 is prevented from being cut when the third section 143 contacts the electrode tab 21, improving rationality of the overall structure of the cell 100, and enhancing safety of use of the electrode tab 21.

Definitely, a shape of the head 14 of the inner spacer 10 is not limited thereto, and the head 14 of the inner spacer 10 may further be elliptical, drop-shaped, etc., so as to reduce damage to the electrode tab 21.

In some embodiments, as shown in FIG. 1 to FIG. 3, a part of the electrode tab 21 is located above the bottom plate 11, that is, the electrode tab 21 extends along the upper surface of the support plate 13 to an end of the support plate 13 away from the head 14, and then continues extending. In this way, a length of connection between the electrode tab 21 and the conductive terminal 70 is great, that is, an area in which the electrode tab 21 contacts the conductive terminal 70 is great, to effectively enhance overcurrent capability between the electrode tab 21 and the conductive terminal 70 and improve practicability of the cell 100. In addition, a part of the electrode tab 21 is spaced from the bottom plate 11, so that the part of the electrode tab 21 is well attached to the conductive terminal 70.

The present disclosure further provides a battery module provided with the cell of any of the foregoing embodiments, and the cells are connected in series or in parallel through a connector of the cell to form the battery module.

The present disclosure further provides a power battery.

The power battery according to an embodiment of the present disclosure is provided with the battery module of the foregoing embodiment.

The present disclosure further provides an electric vehicle.

For the electric vehicle according to an embodiment of the present disclosure, the power battery of the foregoing embodiment is disposed. For the electric vehicle according to an embodiment of the present disclosure, an inner spacer 10 is disposed between a pole core 20 and a conductive terminal 70. The inner spacer 10 may support an electrode tab 21, and insulate and shape the electrode tab 21 simultaneously, and prevent the electrode tab 21 and the core 20 from being short-circuited. In addition, the electrode tab 21 is directly connected to the conductive terminal 70 by welding, and the electrode tab 21 is connected to the conductive terminal 70 without a connector, reducing a space occupied by the cell 100 in a height direction, significantly improving use performance of an entire vehicle.

The cell according to an embodiment of the present disclosure includes: a housing; a cover plate located at an end of the housing; a pole core located in the housing and having an electrode tab; an inner spacer including a bottom plate, a connecting plate, and a support plate, where the bottom plate is disposed on a surface of the pole core facing the cover plate, one end of the connecting plate is connected to a side edge of the bottom plate and is formed in a bent shape with a side edge of the bottom plate, the other end of the connecting plate is connected to the support plate and is formed in a bent shape with the support plate, and the support plate extends toward a direction away from the bottom plate, a part of the electrode tab extending from a side surface of the support plate facing the pole core to a side surface away from the pole core; and a conductive terminal disposed on the cover plate and electrically connected to a side surface of the electrode tab away from the support plate.

The cell according to an embodiment of the present disclosure further includes a transition plate having a through hole, where the conductive terminal sequentially passes through the cover plate and the through hole and is welded to the transition plate, and a side surface of the transition plate away from the cover plate is welded to the side surface of the electrode tab away from the support plate.

The cell according to an embodiment of the present disclosure further includes an insulating plate, where the insulating plate is located between the cover plate and the transition plate and the insulating plate is provided with a fixing hole, the conductive terminal passing through the fixing hole to fix the insulating plate.

For the cell according to an embodiment of the present disclosure, the inner spacer is fixedly connected to the insulating plate through clamping.

For the cell according to an embodiment of the present disclosure, an end of the inner spacer is provided with a positioning slot, and the insulating plate has a buckle that fits the positioning slot.

For the cell according to an embodiment of the present disclosure, the inner spacer further includes: a clamping plate disposed on a side edge of the bottom plate, where the clamping plate and the support plate are located on adjacent sides of the bottom plate, and the positioning slot is disposed at an end of the clamping plate away from the bottom plate and located on a surface of the clamping plate facing the pole core.

For the cell according to an embodiment of the present disclosure, the end of the clamping plate is provided with an avoiding groove for avoiding the buckle.

For the cell according to an embodiment of the present disclosure, the buckle includes: a connecting post, one end of the connecting post being connected to the insulating plate; and a clamping portion connected to the other end of the connecting post and protruding toward a direction close to the clamping plate, an end surface of the clamping portion facing the clamping plate being pressed against a bottom wall of the positioning slot, and an end surface of the clamping portion away from the clamping plate being provided with a guide surface.

For the cell according to an embodiment of the present disclosure, the connecting plate is a ring surrounding the bottom plate, and the clamping plate is connected to the connecting plate and is disposed coplanar with the support plate.

For the cell according to an embodiment of the present disclosure, the bottom plate, the connecting plate, the support plate, and the clamping plate are integrally formed.

For the cell according to an embodiment of the present disclosure, the inner spacer further includes: a head connected to an end of the support plate away from the connecting plate, at least one part of the head being arc-shaped.

For the cell according to an embodiment of the present disclosure, the head is arc-shaped.

For the cell according to an embodiment of the present disclosure, a thickness of the head is greater than a thickness of the support plate.

For the cell according to an embodiment of the present disclosure, a profile of the head includes a first section, a second section, and a third section that are sequentially connected, one end of the first section away from the second section being connected to a surface of the support plate facing the pole core, an end of the third section away from the second section being connected to a surface of the support plate away from the pole core, and the first section being arc-shaped.

For the cell according to an embodiment of the present disclosure, the second section is linear, a distance from the second section to the pole core being greater than a distance from the support plate to the pole core.

For the cell according to an embodiment of the present disclosure, the third section is arc-shaped, a radius of curvature of the first section being less than a radius of curvature of the third section.

For the cell according to an embodiment of the present disclosure, the third section includes two arcs, centers of curvature of the two arcs of the third section being respectively located on both sides of the third section.

For the cell according to an embodiment of the present disclosure, both the bottom plate and the support plate are disposed in a direction parallel to the cover plate.

For the cell according to an embodiment of the present disclosure, the connecting plate is perpendicular to the support plate and the bottom plate.

For the cell according to an embodiment of the present disclosure, the electrode tab is spaced apart from the bottom plate and the connecting plate.

For the cell according to an embodiment of the present disclosure, a part of the electrode tab is located above the bottom plate and spaced apart from the bottom plate.

For the cell according to an embodiment of the present disclosure, the conductive terminal is connected to the cover plate in an insulated and sealed manner..

In the description of this specification, the description of the reference terms such as "an embodiment", "some embodiments", "exemplary embodiments", "example", "specific example", or "some examples" means that the specific features, structures, materials or characteristics described with reference to the embodiment or example are included in at least one embodiment or example of the present disclosure. In this specification, schematic descriptions of the foregoing terms do not necessarily directed at the same embodiment or example. Moreover, the specific features, structures, materials, or characteristics described may be combined in any one or more embodiments or examples in an appropriate manner.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A cell, comprising:
a housing;
a cover plate located at an end of the housing;
a pole core located in the housing and having a electrode tab;
an inner spacer comprising a bottom plate, a connecting plate, and a support plate, wherein the bottom plate is disposed on a surface of the pole core facing the cover plate, one end of the connecting plate is connected to a side edge of the bottom plate and is formed in a bent shape with a side edge of the bottom plate, the other end of the connecting plate is connected to the support plate and is formed in a bent shape with the support plate, and the support plate extends toward a direction away from the bottom plate, a part of the electrode tab extending from a side surface of the support plate facing the pole core to a side surface away from the pole core; and
a conductive terminal disposed on the cover plate and electrically connected to a side surface of the electrode tab away from the support plate.

2. The cell according to claim 1, further comprising: a transition plate having a through hole, wherein the conductive terminal sequentially passes through the cover plate and the through hole and is welded to the transition plate, and a side surface of the transition plate away from the cover plate is welded to a side surface of the electrode tab away from the support plate.

3. The cell according to claim 2, further comprising: an insulating plate located between the cover plate and the transition plate and the insulating plate is provided with a fixing hole, wherein the conductive terminal passes through the fixing hole to fix the insulating plate.

4. The cell according to claim 3, wherein the inner spacer is fixedly connected to the insulating plate through clamping.

5. The cell according to claim 4, wherein an end of the inner spacer is provided with a positioning slot and the insulating plate has a buckle that fits the positioning slot.

6. The cell according to claim 5, wherein the inner spacer further comprises: a clamping plate disposed on a side edge of the bottom plate, wherein the clamping plate and the support plate are located on adjacent sides of the bottom plate, and the positioning slot is disposed at an end of the clamping plate away from the bottom plate and located on a surface of the clamping plate facing the pole core.

7. The cell according to claim 6, wherein the end of the clamping plate is provided with an avoiding groove for avoiding the buckle.

8. The cell according to claim 6 or 7, wherein the buckle comprises:
a connecting post, one end of the connecting post being connected to the insulating plate; and
a clamping portion connected to the other end of the connecting post and protruding toward a direction close to the clamping plate, an end surface of the clamping portion facing the clamping plate being pressed against a bottom wall of the positioning slot, and an end surface of the clamping portion away from the clamping plate is provided with a guide surface.

9. The cell according to any of claims 6 to 8, wherein the connecting plate is a ring surrounding the bottom plate, and the clamping plate is connected to the connecting plate and is disposed coplanar with the support plate.

10. The cell according to claim 9, wherein the bottom plate, the connecting plate, the support plate, and the clamping plate are integrally formed.

11. The cell according to any of claims 1 to 10, wherein the inner spacer further comprises: a head connected to an end of the support plate away from the connecting plate, at least one part of the head being arc-shaped.

12. The cell according to claim 11, wherein the head is arc-shaped.

13. The cell according to claim 11 or 12, wherein a thickness of the head is greater than a thickness of the support plate.

14. The cell according to any of claims 11 to 13, wherein a profile of the head comprises a first section, a second section, and a third section that are sequentially connected, one end of the first section away from the second section being connected to a surface of the support plate facing the pole core, one end of the third section away from the second section being connected to a surface of the support plate away from the pole core, and the first section being arc-shaped.

15. The cell according to claim 14, wherein the second section is linear, a distance from the second section to the pole core being greater than a distance from the support plate to the pole core.

16. The cell according to claim 14 or 15, wherein the third section is arc-shaped, a radius of curvature of the first section is less than a radius of curvature of the third section.

17. The cell according to any of claims 14 to 16, wherein the third section comprises two arcs, centers of curvature of the two arcs of the third section being respectively located on both sides of the third section.

18. The cell according to any of claims 1 to 17, wherein both the bottom plate and the support plate are disposed in a direction parallel to the cover plate.

19. The cell according to any of claims 1 to 18, wherein the connecting plate is perpendicular to the support plate and the bottom plate.

20. The cell according to any of claims 1 to 19, wherein the electrode tab is spaced apart from the bottom plate and the connecting plate.

21. The cell according to any of claims 1 to 20, wherein a part of the electrode tab is located above the bottom plate and spaced apart from the bottom plate.

22. The cell according to any of claims 1 to 21, wherein the conductive terminal is connected to the cover plate in an insulated and sealed manner.

23. A battery module, comprising a connector and the cell according to any of claims 1 to 22, wherein the cells are connected in series or in parallel through the connector.

24. A power battery, comprising a pack body and a battery module disposed in the pack body, wherein the battery module is the battery module according to claim 23.

25. An electric vehicle provided with the power battery according to claim 24.
